# EUROPÄISCHE PATENTSCHRIFT

(11) **EP 3 688 937 B1**
(45) Veröffentlichungstag und Bekanntmachung des Hinweises auf die Patenterteilung: **29.09.2021**
(21) Anmeldenummer: 18758864.5
(22) Anmeldetag: 21.08.2018
(51) Int. Cl.: H04L 12/28, H04L 12/40, H04L 29/08, G05B 19/418, G05B 19/042, H04L 12/24

(54) **DATENSTRUKTUR FÜR DIE ÜBERMITTILUNG VON DATEN AUS EINEM FELDBUSNETZWERK IN EINE CLOUD**
DATA STRUCTURE FOR THE TRANSFER OF DATA FROM A FIELDBUS NETWORK INTO A CLOUD
STRUCTURE DE DONNÉES POUR LA TRANSMISSION DE DONNÉES D'UN RÉSEAU DE BUS DE TERRAIN À UN NUAGE

(30) Priorität: 28.09.2017 DE 102017122621
(43) Veröffentlichungstag der Anmeldung: 05.08.2020
(73) Patentinhaber: Endress+Hauser Process Solutions AG, 4153 Reinach (CH)
(72) Erfinder: MAYER, Michael, 4104 Oberwil (CH); PÖSCHMANN, Axel, 4057 Basel (CH)
(74) Vertreter: Andres, Angelika Maria
(86) Internationale Anmeldenummer: PCT/EP2018/072522
(87) Internationale Veröffentlichungsnummer: WO 2019/063202

(56) Entgegenhaltungen:
- DE-A1-102016 101 200
- US-A1- 2012 151 017
- US-A1- 2012 303 832

## Beschreibung

Die Erfindung betrifft ein Feldbusnetzwerk, ein Feldgerät für ein Feldbusnetzwerk sowie eine Anbindungsvorrichtung für ein Feldbusnetzwerk, die dazu ausgelegt ist, Daten aus dem Feldbusnetzwerk in die Cloud zu übertragen. Darüber hinaus betrittt die Erfindung ein Verfahren zum Schreiben von Daten aus einem Feldbusnetzwerk in eine Cloud.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Protokollierung, Dokumentation und späteren Auswertung der innerhalb eines Feldbussystems anfallenden Daten können das Feldbussystem bzw. einzelne Feldgeräte des Feldbussystems mit einem Zugang zu einer Cloud ausgestattet sein. Auf diese Weise können ausgewählte Parameter der Feldgeräte sowie beispielsweise Daten zur Überwachung des Gerätezustands in die Cloud geschrieben werden. Dabei ist es auch möglich, einzelne Parameter in festgelegten zeitlichen Abständen vom jeweiligen Feldgerät abzufragen und in die Cloud zu schreiben.

Die US 2012/151017 A1 und die DE 10 2016 101200 A1 stellen Beispiele für Verfahren und Systeme dar, in denen Daten von Feldgeräten, bzw. Daten in Feldbussystem, in eine Cloud geladen werden.

Die US2012/3038832 A1 offenbart ein System zum Etablieren einer einheitlichen Geräteabstraktionsschicht.

Aufgabe der Erfindung ist es, die Datenübertragung von Geräten des Feldbusnetzwerks zur Anbindungsvorrichtung und von dort weiter in die Cloud zu vereinfachen.

Gelöst wird diese Aufgabe durch die in den Ansprüchen 1, 13, 14 und 15 angegebenen Merkmale.

Vorteilhafte Weiterentwicklungen der Erfindung sind in den Unteransprüchen angegeben.

### Anlage 1

Ein Feldbusnetzwerk entsprechend den Ausführungsformen der Erfindung umfasst mindestens ein Gerät sowie eine Anbindungsvorrichtung, die dazu ausgelegt ist, Daten aus dem Feldbusnetzwerk in eine Cloud zu übertragen. Auf mindestens einem der Geräte ist jeweils eine abgeleitete Klasse installiert, die von einer vorgegebenen Kopfklasse abgeleitet ist, wobei durch die vorgegebene Kopfklasse Kopfattribute festgelegt sind und durch die abgeleitete Klasse zusätzliche Attribute gerätebezogen festlegbar sind, wobei das mindestens eine der Geräte dazu ausgelegt ist, ausgehend von der abgeleiteten Klasse ein Datenobjekt für die Datenübertragung zur Cloud zu erzeugen. Die Anbindungsvorrichtung ist dazu ausgelegt, das Datenobjekt vom jeweiligen Gerät zu empfangen, zumindest einen Teil der im Datenobjekt enthaltenen Daten in ein Format einer Schnittstelle der Cloud umzuwandeln und die Daten in die Cloud zu schreiben.

Durch die vorgegebene Kopfklasse wird eine vereinheitlichte Datenstruktur für die Datenübertragung von den verschiedenen Geräten des Feldbussystems zur Anbindungsvorrichtung vorgegeben. In der Kopfklasse werden insbesondere die Kopfattribute für diese Datenübertragung spezifiziert, weiche beispielsweise Geräteidentifikationsdaten wie z.B. Hersteller und Seriennummer eines Geräts umfassen können. Von dieser vorgegebenen Kopfklasse werden abgeleitete Klassen abgeleitet, die dann auf den jeweiligen Geräten installiert werden. Nachdem die abgeleiteten Klassen von der Kopfklasse abgeleitet sind, umfassen sie die in der Kopfklasse festgelegten Kopfattribute. Zusätzlich können die abgeleiteten Klassen gerätespezifisch festlegbare zusätzliche Attribute umfassen. Eine abgeleitete Klasse mit einer für ein spezielles Gerät bzw. einen Gerätetyp getroffenen Auswahl von zusätzlichen Attributen wird beispielsweise auf dem jeweiligen Gerät installiert und dient zur Erzeugung eines gerätespezifisch festgelegten Datenobjekts, welches sowohl die Kopfattribute der Kopfklasse als auch die zusätzlichen Attribute umfasst, die in der abgeleiteten Klasse festgelegt werden. Durch die zusätzlichen Attribute kann beispielsweise gerätespezifisch eine Auswahl von Parametern festgelegt werden, deren Werte im Datenobjekt übertragen werden sollen. Auf Seiten des jeweiligen Geräts werden die vom Datenobjekt benötigten Daten ausgelesen und ins Datenobjekt eingefügt, welches anschließend von dem Gerät zur Anbindungsvorrichtung übertragen wird. Die Anbindungsvorrichtung ist dazu ausgelegt, die von den jeweiligen Geräten erhaltenen Daten in das Format der Cloud umzusetzen und in die Cloud zu schreiben.

Durch die Ableitung der abgeleiteten Klassen und somit auch der Datenobjekte von einer gemeinsamen Kopfklasse wird eine Vereinheitlichung der Datenübertragung von den einzelnen Geräten des Feldbusnetzwerks zur Anbindungsvorrichtung erzielt. Insbesondere kann durch die geeignete Definition der Kopfklasse erreicht werden, dass in jedem Datenobjekt Kopfattribute zur Anbindungsvorrichtung übertragen werden, welche beispielsweise Geräteidentifikationsdaten wie Hersteller und Seriennummer umfassen können. Dadurch wird auf Seiten der Anbindungsvorrichtung eine Zuordnung der Datenobjekte zu den verschiedenen Geräten ermöglicht. Trotz dieser Vereinheitlichung ist jedoch die Möglichkeit gegeben, mittels der zusätzlichen Attribute gerätespezifisch diejenigen Daten und Parameter flexibel festzulegen, die vom Gerät in die Cloud geschrieben werden sollen. Dadurch hat der Anwender die Möglichkeit, pro Gerät individuell festzulegen, welche Parameter protokolliert werden sollen. Dadurch können unterschiedliche Erfordernisse beispielsweise bei der Qualitätsüberwachung oder bei der Überwachung der Gerätegesundheit (Asset Health) berücksichtigt werden.

Ein weiterer Vorteil der Datenstruktur ist, dass das Abrufen und Zusammenstellen der Daten weitgehend von der Anbindungsvorrichtung zu den jeweiligen Geräten verlagert wird. Bei bisherigen Lösungen war es erforderlich, auf Seiten der Anbindungsvorrichtung für eine Vielzahl von Gerätetypen gerätespezifische Informationen vorzuhalten, beispielsweise Informationen darüber, unter welchen Adressen des Geräts die Seriennummer bzw. der Hersteller hinterlegt war und an welchen Adressen des Geräts relevante Parameter gespeichert waren. Insofern war es bei den Lösungen des Stands der Technik erforderlich, auf einer Anbindungsvorrichtung eine Vielzahl von gerätespezifischen Informationen und insbesondere von Informationen zur Adressierung und zur Adressraumbelegung der einzelnen Gerätetypen bereitzuhalten. Bei der erfindungsgemäßen Datenstruktur erzeugt das jeweilige Gerät das Datenobjekt ausgehend von der abgeleiteten Klasse selbst. Das Gerät bzw. die Betriebssoftware des Geräts ist dann dafür verantwortlich, die im Datenobjekt zu übertragenden Daten, also beispielsweise Geräteidentifikationsdaten und Parameterwerte, an den verschiedenen Adressen des Geräts auszulesen und ins Datenobjekt zu schreiben. Der Aufwand des Abrufens und Zusammenstellens der benötigten Information kann also zum großen Teil auf das jeweilige Gerät übergehen. Die Anbindungsvorrichtung ist zum Beispiel lediglich dafür zuständig, die in den ankommenden Datenobjekten enthaltenen Daten in ein für die Schnittstelle zur Cloud geeignetes Format umzusetzen. Die bisher auf Seiten der Anbindungsvorrichtung vorgehaltenen gerätespezifischen Informationen sind nicht mehr erforderlich. Die Anbindungsvorrichtung kann daher beispielsweise deutlich schlanker als bisher ausgebildet sein. Insbesondere entfällt die Notwendigkeit, auf Seiten der Anbindungsvorrichtung gerätespezifische Informationen betreffend die Adressierung und Adressraumbelegung der einzelnen Geräte zu aktualisieren und zu pflegen.

Vorzugsweise ist die Anbindungsvorrichtung dazu ausgelegt, das Datenobjekt vom jeweiligen Gerät zu empfangen und zumindest einen Teil der im Datenobjekt enthaltenen Daten unter Berücksichtigung der durch die Kopfklasse vorgegebenen Struktur in ein Format einer Schnittstelle der Cloud umzuwandeln. Vorzugsweise stehen auf Seiten der Anbindungsvorrichtung Informationen über Aufbau und Struktur des Datenobjekts zur Verfügung. Diese Information ist beispielsweise aus der vorgegebenen Kopfklasse ableitbar.

Vorzugsweise umfassen die Kopfattribute mindestens eines von Metadaten und Steuerdaten für die Übertragung von Daten aus dem Feldbusnetzwerk in die Cloud. Mit Hilfe dieser Metadaten und/oder Steuerdaten können beispielsweise die Modalitäten für die Übertragung von Daten von dem jeweiligen Gerät in die Cloud festgelegt werden. Beispielsweise kann mit Hilfe der Metadaten und/oder Steuerdaten festgelegt werden, wie häufig und in weichem zeitlichen Abstand Daten vom jeweiligen Gerät zur Anbindungsvorrichtung und von dort weiter in die Cloud übermittelt werden sollen.

Auf einem Feldgerät für ein Feldbusnetzwerk ist entsprechend Ausführungsformen der Erfindung eine abgeleitete Klasse installiert, die aus einer vorgegebenen Kopfklasse abgeleitet ist, wobei durch die Kopfklasse Kopfattribute festgelegt sind und durch die abgeleitete Klasse zusätzliche Attribute des Feldgeräts gerätebezogen festlegbar sind. Das Feldgerät ist dazu ausgelegt, ausgehend von der abgeleiteten Klasse ein Datenobjekt zu erzeugen und bereitzustellen, wobei das Datenobjekt an eine Anbindungsvorrichtung eines Feldbusnetzwerks übermittelbar ist und zumindest ein Teil der im Datenobjekt enthaltenen Daten durch die Anbindungsvorrichtung in die Cloud schreibbar ist.

Eine Anbindungsvorrichtung für ein Feldbusnetzwerk entsprechend den Ausführungsformen der Erfindung ist dazu ausgelegt, Daten aus dem Feldbusnetzwerk in eine Cloud zu übertragen. Die Anbindungsvorrichtung ist dazu ausgelegt, von mindestens einem Gerät des Feldbusnetzwerks jeweils ein Datenobjekt zu empfangen, das ausgehend von einer im jeweiligen Gerät installierten abgeleiteten Klasse erzeugt ist, wobei die abgeleitete Klasse von einer vorgegebenen Kopfklasse abgeleitet ist. Die Anbindungsvorrichtung ist dazu ausgelegt, zumindest einen Teil der im Datenobjekt enthaltenen Daten in ein Format einer Schnittstelle der Cloud umzuwandeln und die Daten in die Cloud zu schreiben.

Ein Verfahren entsprechend den Ausführungsformen der Erfindung dient zum Schreiben von Daten aus einem Feldbusnetzwerk in eine Cloud. Das Feldbusnetzwerk umfasst mindestens ein Gerät, wobei auf mindestens einem der Geräte eine abgeleitete Klasse installiert ist, die aus einer Kopfklasse abgeleitet ist, wobei durch die Kopfklasse Kopfattribute festgelegt sind und durch die abgeleitete Klasse zusätzliche Attribute gerätebezogen festlegbar sind. Darüber hinaus umfasst das Feldbusnetzwerk eine Anbindungsvorrichtung, welche dazu ausgelegt ist, Daten aus dem Feldbusnetzwerk in die Cloud zu schreiben. Das Verfahren umfasst, auf Seiten eines jeweiligen Geräts, Erzeugen eines Datenobjekts ausgehend von der abgeleiteten Klasse, wobei das Datenobjekt Kopfattribute und zusätzliche Attribute umfasst, sowie Übertragen des Datenobjekts vom jeweiligen Gerät zur Anbindungsvorrichtung. Darüber hinaus umfasst das Verfahren, auf Seiten der Anbindungsvorrichtung, Umwandeln von zumindest einem Teil der Daten des Datenobjekts in ein Format einer Schnittstelle der Cloud, und Schreiben der Daten in die Cloud.

Nachfolgend ist die Erfindung anhand von in der Zeichnung dargestellten Ausführungsbeispielen näher erläutert. Es zeigen:
Figur 1 den Aufbau eines Feldbusnetzwerks mit einem Anbindungsgerät für die Datenübermittlung zu einer Cloud;
Figur 2 eine Datenstruktur zur Erzeugung von Datenobjekten, welche in die Cloud zu schreibende Daten von den Feldgeräten, Gatewaygeräten und sonstigen Geräten des Feidbusnetzwerks zum Anbindungsgerät übermitteln; und
Figur 3 den Ablauf der Datenübermittlung zwischen einem Feldgerät, dem Anbindungsgerät und der Cloud.

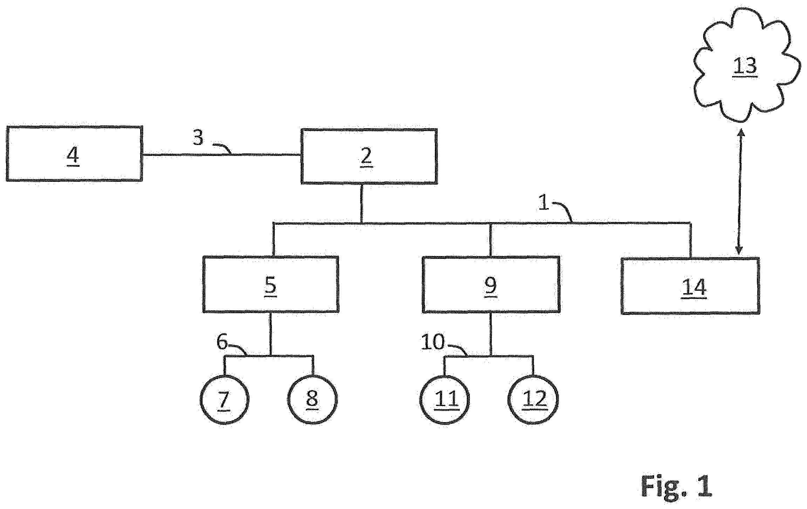

Figur 1 zeigt ein Feldbussystem, das eine Mehrzahl von Gatewaygeräten und Feldgeräten umfasst. An einen Feldbus 1 ist ein Feldzugangsgerät 2 angeschlossen, das über eine Ethernetverbindung 3 mit einem Host 4 verbunden ist. Auf dem Host 4 kann beispielsweise eine Rahmenapplikation mit Treibern zum Parametrieren und Konfigurieren der Gatewaygeräte und Feldgeräte vorgesehen sein. Bei dem in Figur 1 gezeigten Beispiel ist an den Feldbus 1 ein Gatewaygerät 5 angeschlossen, das über einen weiteren Feldbus 6 mit zwei Feldgeräten 7, 8 in Verbindung steht. Darüber hinaus ist an den Feldbus 1 ein weiteres Gatewaygerät 9 angeschlossen, das über einen weiteren Feldbus 10 mit den Feldgeräten 11 und 12 verbunden ist. Bei dem in Figur 1 gezeigten Feldbussystem ist vorgesehen, dass ausgewählte Daten aus dem Feldbussystem in eine Cloud 13 geschrieben werden können. Hierzu ist an den Feldbus 1 ein Anbindungsgerät 14 angeschlossen, das dazu ausgelegt ist, die Kommunikation mit der Cloud 13 abzuwickeln. Insbesondere ist das Anbindungsgerät 14 dazu ausgelegt, ausgewählte Daten aus dem Feldbussystem in die Cloud 13 zu schreiben. Die Datenspeicherung in der Cloud 13 kann beispielsweise dazu dienen, eine Quaiitätsdokumentation von Produktionsabläufen zu schaffen und auf diese Weise eine Qualitätskontrolle zu ermöglichen. Darüber hinaus kann die Datenspeicherung in der Cloud 13 beispielsweise dazu dienen, einen Datenbestand für eine nachfolgende technische oder betriebswirtschaftliche Auswertung der Daten zu schaffen.

Um die auf Seiten der Feldgeräte, Gatewaygeräte und sonstigen Geräte anfallenden Daten in die Cloud 13 schreiben zu können, ist es erforderlich, dass das Anbindungsgerät 14 von den einzelnen Geräten Geräteidentifikationsdaten wie beispielsweise Hersteller und Seriennummer sowie die benötigten Parameterwerte abruft. Die auf Seiten der Geräte anfallenden Daten werden entsprechend diesen Geräteidentifikationsdaten in zugehörige Einträge der Cloud 13 geschrieben. Zum Abruf dieser Informationen war es bisher erforderlich, dass auf Seiten des Anbindungsgerätes 14 umfangreiche gerätespezifische Informationen für die verschiedenen Feldgerätetypen und Gatewaytypen vorgehalten werden müssen, um die benötigten Daten abfragen zu können. Insbesondere war erforderlich, dass auf Seiten des Anbindungsgeräts 14 für jedes Gerät gerätespezifische Informationen über die Adressraumbelegung des Geräts und insbesondere zu den Adressen der Geräteidentifikationsdaten vorhanden waren. Die Vorhaltung und insbesondere auch die Pflege und Aktualisierung dieser gerätespezifischen Informationen auf Seiten des Anbindungsgerätes 14 für die Vielzahl von existierenden Feldgeräten und Gatewaygeräten erforderte einen hohen Aufwand.

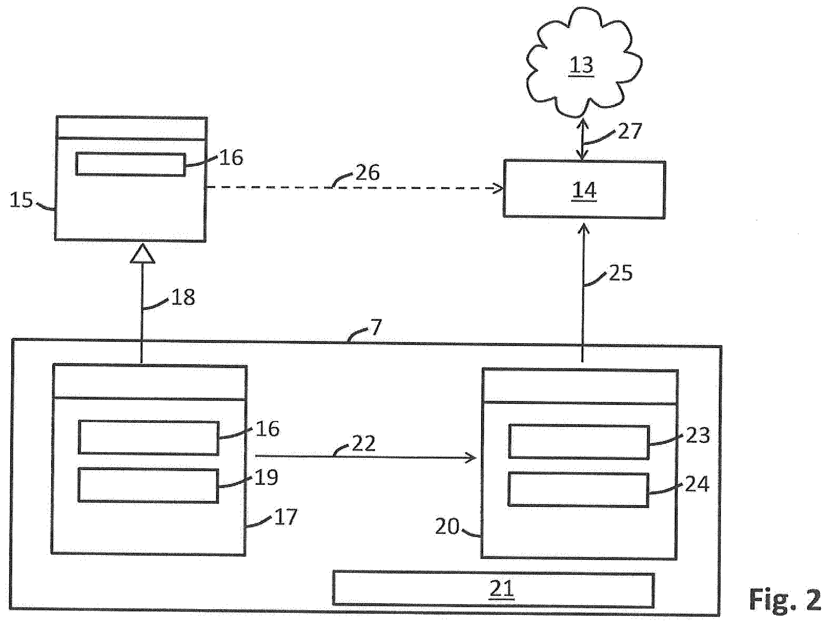

In Figur 2 ist eine Struktur von Klassen und daraus erzeugten Datenobjekten gezeigt, welche die Datenübertragung von den Feldgeräten, Gatewaygeräten und sonstigen Geräten des Feldbussystems zum Anbindungsgerät 14 vereinheitlicht und dadurch vereinfacht. In Figur 2 ist als Beispiel die Datenübertragung von dem Feldgerät 7 zum Anbindungsgerät 14 dargestellt, wobei die Datenübertragung mittels eines hierfür festgelegten Datenobjekts abgewickelt wird. Darüber hinaus können Datenobjekte auch von anderen Feldgeräten, Gatewaygeräten und sonstigen Geräten zum Anbindungsgerät 14 übermittelt werden.

Die Grundstruktur der Datenobjekte, die für die Datenübertragung zwischen zumindest einem Teil der Geräte des Feldbusnetzwerks und dem Anbindungsgerät 14 verwendet wird, wird mittels einer hierfür definierten Kopfklasse 15 festgelegt. Die Kopfklasse 15 umfasst ein oder mehrere Kopfattribute 16, die in dem Datenobjekt übertragen werden. Die Kopfattribute 16 können beispielsweise Geräteidentifikationsdaten umfassen, beispielsweise Informationen zu Hersteller, Gerätetyp und Seriennummer des Geräts. Auf der Basis dieser Geräteidentifikationsdaten kann das Anbindungsgerät 14 einen neuen Eintrag in der Cloud 13 anlegen oder einen bereits existierenden Eintrag in der Cloud 13 identifizieren. Anschließend schreibt das Anbindungsgerät 14 die im Datenobjekt enthaltenen Daten in diesen Eintrag.

Die Kopfattribute 16 können darüber hinaus Daten zum aktuellen Gerätezustand enthalten, beispielsweise Angaben zu einem gemäß NAMUR-Empfehlung festgelegten Gerätezustand. Darüber hinaus können die in der Kopfklasse 15 spezifizierten Kopfattribute 16 Metadaten und/oder Steuerdaten für die Übermittlung von Datenobjekten von Feldgeräten, Gatewaygeräten und sonstigen Geräten zum Anbindungsgerät 14 umfassen. Beispielsweise kann mit Hilfe von Steuer- und/oder Metadaten festgelegt werden, in welchen zeitlichen Abständen ein Datenobjekt von den Feldgeräten und Gatewaygeräten zum Anbindungsgerät 14 übermittelt werden soll. Darüber hinaus kann mittels der Steuer- und/oder Metadaten beispielsweise festgelegt werden, in welchen zeitlichen Abständen welche Parameterwerte von dem Anbindungsgerät 14 in die Cloud 13 geschrieben werden sollen. Darüber hinaus können die Steuer- und/oder Metadaten beispielsweise Angaben zur Syntax der vom Feldgerät oder Gatewaygerät zum Anbindungsgerät 14 übertragenen Daten enthalten.

Von dieser einmal vorab für alle Geräte oder aber für einen Gerätetyp des Feldbusnetzwerks festgelegten Kopfklasse 15 können abgeleitete Klassen abgeleitet werden, die dann auf verschiedenen Feldgeräten, Gatewaygeräten und sonstigen Geräten des Feldbussystems installiert sein können. In dem in Figur 2 gezeigten Beispiel ist auf dem Feldgerät 7 eine abgeleitete Klasse 17 installiert, die von der Kopfklasse 15 abgeleitet ist. Dabei kann die Ableitung der abgeleiteten Klasse von der Kopfklasse 15 beispielsweise gemäß den Grundsätzen der objektorientierten Programmierung erfolgen, sodass die abgeleitete Klasse die Kopfattribute 16 der Kopfklasse 15 erbt. Die Vererbung zwischen der Kopfklasse 15 und der abgeleiteten Klasse 17 ist in Figur 2 durch den Pfeil 18 veranschaulicht. Insofern umfasst auch die auf dem Feldgerät 7 installierte abgeleitete Klasse 17 die Kopfattribute 16, die in der Kopfklasse 15 festgelegt wurden. Darüber hinaus umfasst die abgeleitete Klasse 17 zusätzliche Attribute 19, die für das jeweilige Feldgerät oder Gatewaygerät gerätespezifisch festlegbar sind.

Die auf dem Feldgerät 7 installierte abgeleitete Klasse 17 dient als Ausgangspunkt für die Erzeugung eines Datenobjekts 20, das für die Datenübertragung zwischen dem Feldgerät 7 und dem Anbindungsgerät 14 verwendet wird. Auf dem Feldgerät 7 ist eine Betriebssoftware 21 installiert, welche ausgehend von der abgeleiteten Klasse 17 gemäß dem Pfeil 22 das Datenobjekt 20 als Instanz der abgeleiteten Klasse 17 erzeugt. Das Datenobjekt 20 wird zur Laufzeit instanziiert. Das Datenobjekt 20 enthält Werte 23 der Kopfattribute 16, also beispielsweise Geräteidentifikationsdaten wie den Hersteller und die Seriennummer des Geräts. Diese Werte 23 werden von der Betriebssoftware 21 des Feldgeräts 7 an den hierfür vorgesehenen Adressen des Feldgeräts 7 ausgelesen und in das Datenobjekt 20 eingefügt. Darüber hinaus enthält das Datenobjekt 20 Werte 24 der zusätzlichen Attribute 19, welche ebenfalls durch die Betriebssoftware 21 aus den jeweiligen Adressen des Feldgeräts 7 ausgelesen und in das Datenobjekt 20 eingefügt werden.

Die zusätzlichen Attribute 19 umfassen insbesondere ausgewählte Parameter des jeweiligen Geräts, die zum Anbindungsgerät 14 übermittelt und in der Cloud 13 gespeichert werden sollen. Mittels der zusätzlichen Attribute 19 wird also die Menge der Parameter festgelegt, die aus dem jeweiligen Gerät ausgelesen, zum Anbindungsgerät 14 übermittelt und in die Cloud 13 geschrieben werden soll. Diese Auswahl von zu speichernden Parametern kann pro Feldgerät, Gatewaygerät oder sonstigem Gerät individuell festgelegt werden. Die Auswahl der abzuspeichernden Parameter kann darüber hinaus in Abhängigkeit von einer Konfigurationsoption des Geräts wie beispielsweise "Erdölindustrie" getroffen werden. Außerdem können beispielsweise solche Parameter in die Cloud 13 geschrieben werden, die für Zwecke der Qualitätsdokumentation benötigt werden. Darüber hinaus können Parameter abgespeichert werden, die für die Zustandsüberwachung, Diagnose und Funktionsprüfung des jeweiligen Geräts benötigt werden. Beispielsweise können Feldgeräte, Gatewaygeräte und sonstige Geräte, die die Technologie "Heartbeat" unterstützen, Daten zum eigenen Gerätezustand und Diagnosedaten in vorgegebenen zeitlichen Abständen über das Anbindungsgerät 14 in die Cloud 13 schreiben, um auf diese Weise den Gerätezustand dokumentieren und überwachen zu können. Dies ist unter dem Aspekt der Qualitätssicherung von Bedeutung. Beispielsweise können in der Cloud 13 in vorbestimmten Abständen Parameter abgespeichert werden, die einen Rückschluss auf ein fehlerfreies Funktionieren des Feldgeräts, Gatewaygeräts oder sonstigen Geräts erlauben. Darüber hinaus können beispielsweise in vorbestimmten Abständen solche Parameter abgespeichert werden, die einen Rückschluss auf die Kalibrierung eines Feldgeräts ermöglichen, um beispielsweise ein Driften der Kalibrierung anhand der in der Cloud 13 abgespeicherten Daten erkennen zu können. Die in der Cloud 13 abgelegten Daten eignen sich als Grundlage für die Beurteilung der "Asset Health", also der Gerätegesundheit. Insbesondere kann anhand der in der Cloud 13 gespeicherten Daten ermittelt werden, wenn eine Neukalibrierung oder ein Austausch eines Geräts erforderlich ist.

Die zusätzlichen Attribute 19 in der abgeleiteten Klasse 17 können darüber hinaus gerätespezifisch festgelegte Steuer- und/oder Metadaten enthalten, welche beispielsweise gerätespezifisch die Modalitäten festlegen, gemäß denen die ausgewählten Parameter im Datenobjekt in die Cloud 13 geschrieben werden. Beispielsweise können die gerätespezifisch festgelegten Steuer- und/oder Metadaten angeben, in welchen zeitlichen Abständen welche Parameter aus dem jeweiligen Gerät des Feldbusnetzwerks ausgelesen, im Datenobjekt 20 zum Anbindungsgerät 14 übermittelt und in die Cloud 13 geschrieben werden. Dabei ist es beispielsweise auch möglich, für unterschiedliche Parameter bzw. unterschiedliche Gruppen von Parametern individuell die Modalitäten des Abspeicherns in der Cloud 13 und insbesondere die zeitliche Abfolge der Speichervorgänge festzulegen.

Bei der in Figur 2 gezeigten Lösung ist die Betriebssoftware 21 des Feldgeräts 7 dafür zuständig, die durch die abgeleitete Klasse 17 vorgegebenen Kopfattribute 16 sowie die zusätzlichen Attribute 19 aus den hierfür vorgesehenen Adressen des Feldgeräts 7 auszulesen und in die so erhaltenen Werte 23, 24 in das Datenobjekt 20 zu schreiben. Insofern ist es nicht mehr erforderlich, auf Seiten des Anbindungsgeräts 14 gerätespezifische Informationen über Adressraumbelegungen und insbesondere über die Adressen der Geräteidentifikationsdaten bereit zu halten. Wenn die Datenübertragung mittels des Datenobjekts abgewickelt wird, ist das Anbindungsgerät 14 auch nicht mehr dafür zuständig, Parameterwerte aus den hierfür vorgesehenen Adressen des Feldgeräts 7 abzurufen. Auch die Parameterwerte werden durch die Betriebssoftware 21 in das Datenobjekt 20 eingefügt.

Insgesamt bedeutet dies, dass auf Seiten des Anbindungsgeräts 14 deutlich weniger gerätespezifische Informationen zu verschiedenen Feldgeräten und Gatewaygeräten der verschiedenen Hersteller bereit gehalten und gepflegt werden müssen. Insbesondere ist es nicht mehr erforderlich, zum Abrufen von Geräteidentifikationsdaten auf Seiten des Anbindungsgerätes 14 detaillierte Informationen zu den Adressen und zur Adressraumbelegung der Feldgeräte, Gatewaygeräte und sonstigen Geräte vorzuhalten. Vielmehr ist bei der in Figur 2 gezeigten Lösung die Zuständigkeit für das Auslesen der benötigten Werte der Kopfattribute sowie der ausgewählten Parameterwerte zur Betriebssoftware 21 des Feldgeräts 7 hin verlagert, welche die Adressraumbelegung des Feldgeräts 7 kennt. Durch die Betriebssoftware 21 des Feldgeräts können Geräteattribute wie beispielsweise Hersteller und Seriennummer, darüber hinaus aber auch Daten beispielsweise zu Gerätetyp oder Gerätezustand aus den hierfür vorgesehenen Adressen des Adressraums des Feldgeräts 7 ausgelesen werden. Darüber hinaus ist die Betriebssoftware 21 dafür zuständig, die durch die zusätzlichen Attribute 19 spezifizierten Parameterwerte aus den hierfür vorgesehenen Adressen auszulesen und in das Datenobjekt 20 zu schreiben. Insgesamt werden also die gerätespezifisch zu implementierenden Vorgänge durch die in Figur 2 gezeigte Datenstruktur vom Anbindungsgerät 14 weg und zum jeweiligen Feldgerät, Gatewaygerät oder sonstigen Gerät hin verlagert.

Das auf Seiten des Feldgeräts 7 erstellte Datenobjekt 20 wird gemäß dem Pfeil 25 vom Feldgerät 7 zum Anbindungsgerät 14 übermittelt. Das Anbindungsgerät 14 ist dazu ausgelegt, die im Datenobjekt 20 übermittelten Werte 23 der Kopfattribute sowie die Werte 24 der zusätzlichen Attribute aus dem Datenobjekt 20 auszulesen und diese in ein für die Schnittstelle zur Cloud 13 geeignetes Format umzuwandeln. Für den Zugriff auf das Datenobjekt 20 stehen auf Seiten des Anbindungsgeräts 14 beispielsweise Kenntnisse über die Struktur des Datenobjekts 20 zur Verfügung, die aus der Definition der Kopfklasse 15 und insbesondere aus der Definition der Kopfattribute 16 ableitbar sind. Diese Information über die Struktur des Datenobjekts 20 ist beispielsweise aus der Definition der Kopfklasse 15 ableitbar, was in Figur 2 durch den gestrichelten Pfeil 26 veranschaulicht ist. Das Anbindungsgerät 14 ist mittels dieser Information beispielsweise in der Lage, gezielt auf die im Datenobjekt 20 übermittelten Kopfattribute 16 sowie auf die zusätzlichen Attribute 19 zuzugreifen.

Anhand der in den Kopfattributen 16 übermittelten Geräteidentifikationsdaten kann das Anbindungsgerät 14 von der Cloud 13 abfragen, ob zu diesen Geräteidentifikationsdaten bereits ein Eintrag in der Cloud 13 existiert. Daraufhin wird von der Cloud 13 zum Anbindungsgerät 14 eine Antwort übermittelt, ob bereits ein Eintrag zu diesen Geräteidentifikationsdaten existiert oder nicht. Falls bereits ein Eintrag existiert, können die im Datenobjekt 20 übermittelten Parameterwerte in den bereits bestehenden Eintrag geschrieben werden. Falls zu den Geräteidentifikationsdaten noch kein Eintrag in der Cloud 13 existiert, kann das Anbindungsgerät 14 einen entsprechenden Eintrag neu anlegen und die im Datenobjekt 20 übermittelten Parameterwerte in diesen neu erstellten Eintrag schreiben. Der Datenaustausch zwischen dem Anbindungsgerät 14 und der Cloud 13 ist in Figur 2 durch den Doppelpfeil 27 dargestellt. Zum Schreiben von Daten in die Cloud 13 ist das Anbindungsgerät 14 dazu ausgelegt, die entsprechenden Werte aus dem Datenobjekt 20 auszulesen und in das Format der jeweiligen Schnittstelle zur Cloud 13 umzuwandeln. Bei dieser Schnittstelle kann es sich um eine API (Application Programming Interface) der Cloud 13 handeln, mit der beispielsweise von der Cloud 13 bereitgestellten WebServices angesprochen werden können. Die Daten können beispielsweise als "key/value Paare", also als Datenpaare aus Datenkennung und Datenwert in die Cloud 13 geschrieben werden. Dabei ist das Anbindungsgerät 14 lediglich dazu ausgebildet, die im Datenobjekt 20 enthaltenen Daten in ein für die Schnittstelle zur Cloud 13 geeignetes Format umzuwandeln. Ein tieferes Verständnis der Bedeutung der von den einzelnen Feldgeräten und Gatewaygeräten erhaltenen Daten ist dabei auf Seiten des Anbindungsgeräts 14 nicht erforderlich. Das Anbindungsgerät 14 ist beispielsweise lediglich dazu ausgelegt, die im Datenobjekt 20 übermittelten Werte 23, 24 gemäß vorgegebenen Regeln in ein für die Cloud 13 geeignetes Format umzuwandeln und in die Cloud 13 zu schreiben. Auch dies trägt dazu bei, das Anbindungsgerät 14 schlanker und weniger aufwändig als bei bisherigen Lösungen auslegen zu können. Allerdings kann das Anbindungsgerät 14 beispielsweise dazu ausgelegt sein, zu zumindest einigen Paaren von Datenkennung und Datenwert zusätzliche Tags hinzuzufügen, welche eine kurze Information über die Bedeutung der abgespeicherten Daten enthalten, um auf diese Weise die spätere Auswertung der in der Cloud 13 abgespeicherten Daten zu erleichtern.

Falls ein oder mehrere der im Datenobjekt 20 übermittelten Daten eine periodische Speicherung des jeweiligen Werts in der Cloud 13 erfordern, wird das Datenobjekt 20 in vorgegebenen zeitlichen Abständen vom Feldgerät 7 zum Anbindungsgerät 14 übertragen. Die im Datenobjekt 20 enthaltenen Daten werden durch das Anbindungsgerät 14 in entsprechende Datentupel umgesetzt und in die Cloud 13 geschrieben. Dadurch wird es beispielsweise möglich, anhand der in der Cloud 13 abgelegten Daten die zeitliche Entwicklung eines Parameters zu verfolgen.

Allerdings gibt es innerhalb eines Feldbusnetzwerks häufig auch ein oder mehrere Altgeräte, die nicht für das in Figur 2 gezeigte Datenübertragungsschema ausgelegt sind. Auf derartigen Altgeräten ist keine abgeleitete Klasse installiert, die von der Kopfklasse 15 abgeleitet ist. Derartige Altgeräte sind auch nicht dazu ausgelegt, ein Datenobjekt für die Datenübertragung zur Cloud bereitzustellen. Um auch von diesen Altgeräten Daten abrufen und in die Cloud schreiben zu können, wird für den jeweiligen Typ des Altgeräts eine Datenabbildungsvorschrift erstellt. Diese Datenabbildungsvorschrift legt fest, aus welchen Adressen des Altgeräts Daten vom Anbindungsgerät 14 aus ausgelesen werden und wie die ausgelesenen Daten in das Format der Cloud umzusetzen sind. Derartige Datenabbildungsvorschriften für eine Vielzahl unterschiedlicher Altgeräte könnten beispielsweise auf dem Anbindungsgerät 14 gespeichert sein. Dies würde allerdings bedeuten, dass diese gerätespezifischen Inhalte auf Seiten des Anbindungsgeräts 14 gepflegt und aktualisiert werden müssen. Alternativ dazu könnten Datenabbildungsvorschriften für eine Vielzahl unterschiedlicher Altgeräte in der Cloud 13 gespeichert sein. Wenn das Anbindungsgerät 14 im Feldbusnetzwerk ein Altgerät erkennt, fragt das Anbindungsgerät 14 in der Cloud 13 ab, ob in der Cloud 13 eine zu diesem Altgerät passende Datenabbildungsvorschrift existiert. Falls es in der Cloud 13 eine passende Datenabbildungsvorschrift gibt, wird die Datenabbildungsvorschrift von der Cloud 13 zum Anbindungsgerät 14 heruntergeladen. Entsprechend der Datenabbildungsvorschrift werden durch das Anbindungsgerät 14 Daten aus dem Altgerät ausgelesen. Dabei stellt die Datenabbildungsvorschrift beispielsweise Adressinformationen zum jeweiligen Altgerät zur Verfügung und gibt an, an welchen Adressen des Altgeräts Daten auszulesen sind. Die aus dem Altgerät ausgelesenen Daten werden dann vom Anbindungsgerät 14 in das Format der Schnittstelle zur Cloud 13 umgesetzt und in die Cloud 13 geschrieben. Insofern können mit Hilfe der vordefinierten Datenabbildungsvorschriften vom Anbindungsgerät 14 aus auch von den Altgeräten Daten abgerufen und in die Cloud 13 geschrieben werden.

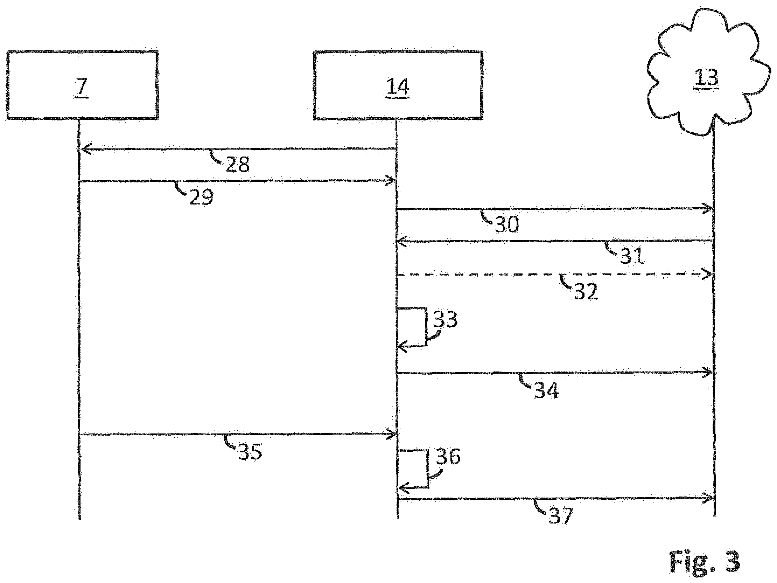

Figur 3 zeigt den Ablauf der Datenübertragung zwischen dem Feldgerät 7, dem Anbindungsgerät 14 und der Cloud 13. Zunächst übermittelt das Anbindungsgerät 14 im Schritt 28 eine Nachricht an das Feldgerät 7, um das Datenobjekt 20 abzurufen. Daraufhin wird im Schritt 29 das Datenobjekt 20 vom Feldgerät 7 zum Anbindungsgerät 14 übertragen. Das Anbindungsgerät 14 liest aus dem Datenobjekt 20 Geräteidentifikationsdaten wie beispielsweise Hersteller und Seriennummer des Feldgeräts 7 aus und sendet in Schritt 30 eine Anfrage an die Cloud 13, ob zu diesem Gerät bereits ein Eintrag besteht. Aus der in Schritt 31 von der Cloud 13 zum Anbindungsgerät 14 übermittelten Antwort der Cloud 13 erfährt das Anbindungsgerät 14, ob die im Datenobjekt 20 enthaltenen Daten in einen bereits zu diesem Feldgerät 7 bestehenden Eintrag geschrieben werden können oder ob ein neuer Eintrag zum Feldgerät 7 erstellt werden soll. Falls noch kein Eintrag in der Cloud 13 existiert, legt das Anbindungsgerät 14 in dem gestrichelt eingezeichneten Schritt 32 einen neuen Eintrag zum Feldgerät 7 in der Cloud 13 an.

Daraufhin greift das Anbindungsgerät 14 auf die im Datenobjekt 20 übermittelten Datenwerte zu, wobei dem Anbindungsgerät 14 die Struktur des Datenobjekts 20 vorzugsweise vorab bekannt ist. Die aus dem Datenobjekt 20 ausgelesenen Datenwerte werden vom Anbindungsgerät 14 in Schritt 33 in ein für die Schnittstelle zur Cloud 13 geeignetes Format umgewandelt. Dabei können die Daten beispielsweise in Form von Datenpaaren bzw. Datentupeln vom Anbindungsgerät 14 zur Cloud 13 übermittelt werden. Jedes Paar bzw. jedes Tupel umfasst zumindest eine Datenkennung und einen Datenwert. Zusätzlich kann das Anbindungsgerät 14 dazu ausgebildet sein, zu den Datenpaaren beziehungsweise Datentupeln Tags hinzuzufügen, welche in dem Eintrag in der Cloud 13 mit abgespeichert werden und die Identifikation der abgespeicherten Daten erleichtern. In Schritt 34 werden die entsprechend der Schnittstellendefinition der Cloud 13 formatierten Daten in den zum Feldgerät 7 gehörigen Eintrag der Cloud 13 geschrieben.

Falls im Datenobjekt 20 festgelegt ist, dass ein oder mehrere im Datenobjekt 20 enthaltene Parameter periodisch erfasst und in die Cloud 13 geschrieben werden sollen, muss das Datenobjekt in regelmäßigen zeitlichen Abständen vom Feldgerät 7 zum Anbindungsgerät 14 übertragen werden. Bei dem in Figur 3 gezeigten Beispiel ist dargestellt, wie nach Ablauf einer vorgegebenen Zeitspanne in Schritt 35 ein weiteres Datenobjekt vom Feldgerät 7 zum Anbindungsgerät 14 übermittelt wird. In Schritt 36 werden die in diesem Datenobjekt enthaltenen Parameterwerte in das Format der Schnittstelle der Cloud 13 umgesetzt und in Schritt 37 in die Cloud 13 geschrieben. Im weiteren Verlauf können in vorgegebenen zeitlichen Abständen weitere Datenobjekte vom Feldgerät 7 zum Anbindungsgerät 14 übermittelt und vom Anbindungsgerät 14 in die Cloud 13 geschrieben werden.

Die in der Cloud 13 gespeicherten Daten können beispielsweise dazu verwendet werden, Produktionsabläufe zu dokumentieren, um auf diese Weise auch zu späteren Zeitpunkten nachweisen zu können, dass Mindestqualitätsanforderungen bei der Produktion erfüllt waren. Darüber hinaus können die in der Cloud 13 gespeicherten Daten als Grundlage für eine weitergehende Analyse und Datenauswertung verwendet werden. Zur Auswertung der Daten kann beispielsweise über einen Rechner, auf dem eine entsprechende Auswerte-oder Analysesoftware installiert ist, über das Internet auf die Cloud 13 zugegriffen werden, um zumindest einen Teil der dort gespeicherten Daten abzurufen und auszuwerten. Alternativ dazu kann die Auswertung der in der Cloud 13 gespeicherten Daten über eine Webapplikation erfolgen, in die sich der Benutzer einloggt, um dann mittels der Webapplikation eine Auswertung der in der Cloud 13 abgespeicherten Daten vorzunehmen. Eine weitere Möglichkeit ist, die Software zur Datenauswertung und Datenanalyse in eine separate zweite Cloud zu integrieren und die zweite Cloud so auszulegen, dass diese zweite Cloud die in der ersten Cloud 13 abgelegten Daten abrufen und auswerten kann.

## Patentansprüche

1. Ein Feldbusnetzwerk, welches aufweist
- mindestens ein Gerät (2, 5, 7, 8, 9, 11, 12),
- eine Anbindungsvorrichtung (14), die dazu ausgelegt ist, Daten aus dem Feldbusnetzwerk in eine Cloud (13) zu übertragen, wobei auf mindestens einem der Geräte (2, 5, 7, 8, 9, 11, 12) jeweils eine abgeleitete Klasse (17) installiert ist, die von einer vorgegebenen Kopfklasse (15) abgeleitet ist, wobei durch die vorgegebene Kopfklasse (15) Kopfattribute (16) festgelegt sind und durch die abgeleitete Klasse (17) zusätzliche Attribute (19) gerätebezogen festgelegt sind, wobei das mindestens eine der Geräte (2, 5, 7, 8, 9, 11, 12) dazu ausgelegt ist, ausgehend von der abgeleiteten Klasse (17) ein Datenobjekt (20) für die Datenübertragung zur Cloud (13) zu erzeugen,
**dadurch gekennzeichnet,**
**dass** die Anbindungsvorrichtung (14) dazu ausgelegt ist, das Datenobjekt (20) vom jeweiligen Gerät (2, 5, 7, 8, 9, 11, 12) zu empfangen, zumindest einen Teil der im Datenobjekt (20) enthaltenen Daten in ein Format einer Schnittstelle der Cloud (13) umzuwandeln und die Daten in die Cloud (13) zu schreiben, und
**dass** die Anbindungsvorrichtung dazu ausgelegt ist, nach Erkennen eines Altgeräts eine Abfrage in der Cloud nach einer zum Altgerät passenden Datenabbildungsvorschrift durchzuführen und, falls in der Cloud eine derartige Datenabbildungsvorschrift für das Altgerät vorhanden ist, die zum Altgerät passende Datenabbildungsvorschrift von der Cloud herunterzuladen.

2. Feldbusnetzwerk nach Anspruch 1, **dadurch gekennzeichnet, dass** die Anbindungsvorrichtung dazu ausgelegt ist, das Datenobjekt vom jeweiligen Gerät zu empfangen, zumindest einen Teil der im Datenobjekt enthaltenen Daten unter Berücksichtigung der durch die Kopfklasse vorgegebenen Struktur in ein Format einer Schnittstelle der Cloud umzuwandeln.

3. Feldbusnetzwerk nach Anspruch 1 oder Anspruch 2, **dadurch gekennzeichnet, dass** die abgeleitete Klasse die in der Kopfklasse festgelegten Kopfattribute von der Kopfklasse erbt.

4. Feldbusnetzwerk nach einem der Ansprüche 1 bis 3, **gekennzeichnet durch** mindestens eines von folgenden:
- die Kopfattribute umfassen Geräteidentifikationsdaten des jeweiligen Geräts;
- die Kopfattribute umfassen Informationen zu Hersteller und Seriennummer des jeweiligen Geräts;
- die Kopfattribute umfassen Zustandsdaten des jeweiligen Geräts;
- die Kopfattribute umfassen NAMUR-Daten des jeweiligen Geräts;
- die zusätzlichen Attribute legen die in die Cloud zu schreibenden Parameter des jeweiligen Geräts fest;
- die zusätzlichen Attribute umfassen Parameter zu mindestens einem von Zustandsüberwachung, Diagnose und Funktionsprüfung des Feldgeräts;
- die zusätzlichen Attribute umfassen regelmäßig zu erfassende Parameter des jeweiligen Geräts.

5. Feldbusnetzwerk nach einem der Ansprüche 1 bis 4, **gekennzeichnet durch** mindestens eines von folgenden:
- die im Datenobjekt durch die zusätzlichen Attribute festgelegte Auswahl von Parametern des Geräts ist frei festgelegt;
- die im Datenobjekt durch die zusätzlichen Attribute festgelegte Auswahl von Parametern des Geräts ist in Abhängigkeit vom jeweiligen Gerät und einer jeweiligen Konfigurationsoption des Geräts ausgewählt.

6. Feldbusnetzwerk nach einem der Ansprüche 1 bis 5, **dadurch gekennzeichnet, dass** die Anbindungsvorrichtung dazu ausgelegt ist, ein Datenobjekt von einem Gerät abzurufen, anhand von in den Kopfattributen enthaltenen Geräteidentifikationsdaten des Geräts einen Datensatz in der Cloud anzulegen oder einen vorhandenen Datensatz zu identifizieren und zumindest einen Teil der in dem Datenobjekt enthaltenen Daten in den zu den Geräteidentifikationsdaten passenden Datensatz in der Cloud zu schreiben.

7. Feldbusnetzwerk nach einem der Ansprüche 1 bis 6, **dadurch gekennzeichnet, dass** das mindestens eine Gerät mindestens eines von folgenden umfasst: mindestens ein Feldgerät, mindestens ein Gatewaygerät, mindestens ein Feldzugangsgerät.

8. Feldbusnetzwerk nach einem der Ansprüche 1 bis 7, **dadurch gekennzeichnet, dass** die Kopfattribute mindestens eines von Metadaten und Steuerdaten für die Übertragung von Daten aus dem Feldbusnetzwerk in die Cloud umfassen.

9. Feldbusnetzwerk nach Anspruch 8, **dadurch gekennzeichnet, dass** durch die Metadaten und/oder Steuerdaten festgelegt ist, in welchen zeitlichen Abständen das Datenobjekt eines jeweiligen Geräts zur Anbindungsvorrichtung zu übertragen ist.

10. Feldbusnetzwerk nach einem der Ansprüche 1 bis 9, **dadurch gekennzeichnet, dass** das Datenobjekt zu einem oder mehreren der zusätzlichen Attribute Informationen umfasst, welche angeben, in welchen zeitlichen Abständen das jeweilige zusätzliche Attribut vom jeweiligen Gerät abzufragen ist.

11. Feldbusnetzwerk nach einem der Ansprüche 1 bis 10, **gekennzeichnet durch** mindestens eines von folgenden:
- die Schnittstelle der Cloud ist gemäß dem Standard WebServices realisiert;
- die Anbindungsvorrichtung ist dazu ausgelegt, im Datenobjekt enthaltene Daten als Paare von Datenkennung und Wert in die Cloud zu schreiben;
- die Anbindungsvorrichtung ist dazu ausgelegt, zumindest einen Teil der im Datenobjekt enthaltenen Daten mit Tags zu versehen und als Datenkennungen und Werte zusammen mit den Tags in die Cloud zu schreiben;
- eine Webapplikation ist dazu ausgestaltet, auf die Parameterwerte in der Cloud zuzugreifen und auszuwerten;
- eine zweite Cloud ist dazu ausgestaltet, auf die Parameterwerte in der Cloud zuzugreifen und auszuwerten;
- ein Rechner ist dazu ausgestaltet, auf die Parameterwerte in der Cloud über das Internet zuzugreifen und auszuwerten.

12. Feldbusnetzwerk nach einem der Ansprüche 1 bis 11, **dadurch gekennzeichnet, dass** die Anbindungsvorrichtung dazu ausgelegt ist, von mindestens einem Altgerät, auf dem keine von der vorgegebenen Kopfklasse abgeleitete Klasse installiert ist und das nicht dazu ausgelegt ist, ein Datenobjekt für die Datenübertragung zur Cloud bereitzustellen, entsprechend mindestens einer vordefinierten Datenabbildungsvorschrift Daten abzurufen und in das Format der Schnittstelle der Cloud umzuwandeln; und/oder dass in der Cloud eine Mehrzahl von vordefinierten Datenabbildungsvorschriften für Altgeräte abgespeichert ist, wobei eine Datenabbildungsvorschrift spezifiziert, wie aus dem jeweiligen Altgerät Daten abzurufen und in das Format der Schnittstelle der Cloud umzuwandeln sind.

13. Ein Feldgerät (7, 8, 11, 12), welches zur Verwendung in einem Feldbusnetzwerk gemäß zumindest einem der Ansprüche 1 bis 12 ausgestaltet ist, wobei auf dem Feldgerät (7, 8, 11, 12) eine abgeleitete Klasse (17) installiert ist, die aus einer vorgegebenen Kopfklasse (15) abgeleitet ist, wobei durch die Kopfklasse (15) Kopfattribute (16) festgelegt sind und durch die abgeleitete Klasse (17) zusätzliche Attribute (19) des Feldgeräts gerätebezogen festgelegt sind,
wobei das Feldgerät (7, 8, 11, 12) dazu ausgelegt ist, ausgehend von der abgeleiteten Klasse (17) ein Datenobjekt (20) zu erzeugen und bereitzustellen, wobei das Datenobjekt (20) an eine Anbindungsvorrichtung (14) eines Feldbusnetzwerks übermittelt ist und wobei die Anbindungsvorrichtung (14) dazu ausgestaltet ist, zumindest einen Teil der im Datenobjekt (20) enthaltenen Daten in die Cloud (13) zu schreiben.

14. Eine Anbindungsvorrichtung (14), welche zur Verwendung in einem Feldbusnetzwerk gemäß zumindest einem der Ansprüche 1 bis 12 ausgelegt ist und die dazu ausgelegt ist, Daten aus dem Feldbusnetzwerk in eine Cloud (13) zu übertragen,
**dadurch gekennzeichnet, dass**
- die Anbindungsvorrichtung (14) dazu ausgelegt ist, von mindestens einem Gerät (2, 5, 7, 8, 9, 11, 12) des Feldbusnetzwerks jeweils ein Datenobjekt (20) zu empfangen, das ausgehend von einer im jeweiligen Gerät (2, 5, 7, 8, 9, 11, 12) installierten abgeleiteten Klasse (17) erzeugt ist, wobei die abgeleitete Klasse (17) von einer vorgegebenen Kopfklasse (15) abgeleitet ist, und
- die Anbindungsvorrichtung (14) dazu ausgelegt ist, zumindest einen Teil der im Datenobjekt (20) enthaltenen Daten in ein Format einer Schnittstelle der Cloud (13) umzuwandeln und die Daten in die Cloud (13) zu schreiben.

15. Verfahren zum Schreiben von Daten aus einem Feldbusnetzwerk in eine Cloud (13), wobei das Feldbusnetzwerk aufweist:
- mindestens ein Gerät (2, 5, 7, 8, 9, 11, 12), wobei auf mindestens einem der Geräte (2, 5, 7, 8, 9, 11, 12) eine abgeleitete Klasse (17) installiert ist, die aus einer Kopfklasse (15) abgeleitet ist, wobei durch die Kopfklasse (15) Kopfattribute (16) festgelegt sind und durch die abgeleitete Klasse (17) zusätzliche Attribute (19) gerätebezogen festgelegt sind,
- eine Anbindungsvorrichtung (14), welche dazu ausgelegt ist, Daten aus dem Feldbusnetzwerk in die Cloud (13) zu schreiben,
wobei das Verfahren folgende Schritte umfasst:
- auf Seiten eines jeweiligen Geräts (2, 5, 7, 8, 9, 11, 12), Erzeugen eines Datenobjekts (20) ausgehend von der abgeleiteten Klasse (17), wobei das Datenobjekt (20) Kopfattribute (16) und zusätzliche Attribute (19) umfasst,
- Übertragen des Datenobjekts (20) vom jeweiligen Gerät (2, 5, 7, 8, 9, 11, 12) zur Anbindungsvorrichtung (14), **dadurch gekennzeichnet,**
- **dass** auf Seiten der Anbindungsvorrichtung (14), zumindest ein Teil der Daten des Datenobjekts (20) in ein Format einer Schnittstelle der Cloud (13) umgewandelt wird,
- die Daten in die Cloud (13) geschrieben werden, und
- **dass** die Anbindungsvorrichtung nach Erkennen eines Altgeräts eine Abfrage in der Cloud nach einer zum Altgerät passenden Datenabbildungsvorschrift durchführt und, falls in der Cloud eine derartige Datenabbildungsvorschrift für das Altgerät vorhanden ist, die zum Altgerät passende Datenabbildungsvorschrift von der Cloud herunterlädt.

## Claims

1. A fieldbus network, comprising
- at least one device (2, 5, 7, 8, 9, 11, 12),
- a connection apparatus (14), which is designed to transfer data from the fieldbus network to a cloud (13), wherein a derived class (17) is installed on at least one of the devices (2, 5, 7, 8, 9, 11, 12), said class being derived from a predefined head class (15), wherein head attributes (16) are defined by the predefined head class (15) and additional attributes (19) are defined in a device-specific manner by the derived class (17), wherein the at least one of the devices (2, 5, 7, 8, 9, 11, 12) is designed to generate a data object (20) for data transmission to the cloud (13) on the basis of the derived class (17),
**characterized in that**
the connection apparatus (14) is designed to receive the data object (20) from the respective device (2, 5, 7, 8, 9, 11, 12), to convert at least some of the data contained in the data object (20) to a format of an interface of the cloud (13) and to write the data to the cloud (13), and
**in that**, after detecting an old device, the connection apparatus is designed to execute a request in the cloud for a data mapping rule that suits the old device and, if such a data mapping rule for the old device is available in the cloud, to download the data mapping rule to suit the old device from the cloud.

2. Fieldbus network as claimed in Claim 1, **characterized in that** the connection apparatus is designed to receive the data object from the respective device, to convert at least some of the data contained in the data object to a format of an interface of the cloud while considering the structure predefined by the head class.

3. Fieldbus network as claimed in Claim 1 or Claim 2, **characterized in that** the derived class inherits the head attributes specified in the head class from the head class.

4. Fieldbus network as claimed in one of the Claims 1 to 3, **characterized by** at least one of the following elements:
- the head attributes comprise device identification data of the respective device;
- the head attributes comprise information about the manufacturer and serial number of the respective device;
- the head attributes comprise conditions data of the respective device;
- the head attributes comprise NAMUR data of the respective device;
- the additional attributes specify the parameters of the respective device to be written to the cloud;
- the additional attributes comprise parameters for at least one element among condition monitoring, diagnostics and the function check of the field device;
- the additional attributes comprise parameters of the respective device to be recorded regularly.

5. Fieldbus network as claimed in one of the Claims 1 to 4, **characterized by** at least one of the following elements:
- the selection of parameters of the device defined in the data object by the additional attributes is freely defined;
- the selection of parameters of the device defined in the data object by the additional attributes is selected depending on the respective device and a respective configuration option of the device.

6. Fieldbus network as claimed in one of the Claims 1 to 5, **characterized in that** the connection apparatus is designed to call a data object from a device, to create a data record in the cloud on the basis of the device identification data contained in the head attributes or to identify an existing data record, and to write, in the cloud, at least some of the data contained in the data object to the data record in the cloud corresponding to the device identification data.

7. Fieldbus network as claimed in one of the Claims 1 to 6, **characterized in that** the at least one device comprises at least one of the following elements: at least a field device, at least a gateway device, at least a field access device.

8. Fieldbus network as claimed in one of the Claims 1 to 7, **characterized in that** the head attributes comprise at least one of the following elements: metadata and control data, for the transmission of data from the fieldbus network to the cloud.

9. Fieldbus network as claimed in Claim 8, **characterized in that** the metadata and/or the control data determine the time intervals at which the data object of a respective device is to be transmitted to the connection apparatus.

10. Fieldbus network as claimed in one of the Claims 1 to 9, **characterized in that** the data object comprises information for one or more of the additional attributes that indicate the time intervals at which the respective additional attribute is to be interrogated from the respective device.

11. Fieldbus network as claimed in one of the Claims 1 to 10, **characterized by** at least one of the following elements:
- the interface of the cloud is implemented according to the WebServices standard;
- the connection apparatus is designed to write data contained in the data object as 'data identifier and value' pairs to the cloud;
- the connection apparatus is designed to tag at least some of the data contained in the data object and to write them to the cloud as data identifiers and values together with the tags;
- a web application is designed to access the parameter values in the cloud and to evaluate them;
- a second cloud is designed to access to access and evaluate parameter values in the cloud;
- a computer is designed to access and evaluate the parameter values in the cloud via the Internet.

12. Fieldbus network as claimed in one of the Claims 1 to 11, **characterized in that** the connection apparatus is designed to call data from at least an old device, on which no class derived from the predefined head class is installed, and which is not designed to provide a data object for data transmission to the cloud, according to at least one predefined data mapping rule, and to convert the data to the format of the interface of the cloud; and/or **in that** multiple predefined data mapping rules for old devices are saved in the cloud, wherein a data mapping rule specifies how data are to be called from the old device and converted to the format of the interface of the cloud.

13. Field device (7, 8, 11, 12), which is designed to be used in a fieldbus network as claimed in at least one of the Claims 1 to 12, wherein a derived class (17) is installed on the field device (7, 8, 11, 12), wherein said class is derived from a predefined head class (15), wherein head attributes (16) are defined by the head class (15) and wherein additional attributes (19) of the field device are defined in a device-specific manner by the derived class (17),
wherein the field device (7, 8, 11, 12) is designed to generate and provide a data object (20) based on the derived class (17), wherein the data object (20) is transmitted to a connection apparatus (14) of a fieldbus network, and wherein the connection apparatus (14) is designed to write at least some of the data contained in the data object (20) to the cloud (13).

14. Connection apparatus (14), which is designed to be used in a fieldbus network as claimed in at least one of the Claims 1 to 12 and which is designed to transmit data from the fieldbus network to a cloud (13),
**characterized in that**
- the connection apparatus (14) is designed to receive a data object (20) from the at least one device (2, 5, 7, 8, 9, 11, 12) of the respective fieldbus network, wherein said object is generated on the basis of a derived class (17) installed on the respective device (2, 5, 7, 8, 9, 11, 12), wherein the derived class (17) is derived from a predefined head class (15), and
- wherein the connection apparatus (14) is designed to convert at least some of the data contained in the data object (20) to a format of an interface of the cloud (13) and to write the data to the cloud (13).

15. Procedure designed to write data from a fieldbus network to a cloud (13), wherein the fieldbus network comprises:
- at least one device (2, 5, 7, 8, 9, 11, 12), wherein a derived class (17) is installed on at least one of the devices (2, 5, 7, 8, 9, 11, 12), said class being derived from a head class (15), wherein head attributes (16) are defined by the head class (15) and additional attributes (19) are defined by the derived class (17) in a device-specific manner,
- a connection apparatus (14) designed to write data from the fieldbus network to the cloud (13),
wherein the procedure comprises the following steps:
- Creation, on the part of a device (2, 5, 7, 8, 9, 11, 12), of a data object (20) on the basis of the derived class (17), wherein the data object (20) comprises head attributes (16) and additional attributes (19),
- Transmission of the data object (20) from the respective device (2, 5, 7, 8, 9, 11, 12) to the connection apparatus (14), **characterized in that**
- on the connection apparatus (14) side, at least some of the data of the data object (20) are converted to a format of an interface of the cloud (13),
- **in that** the data are written to the cloud (13), and
- **in that**, after detecting an old device, the connection apparatus, executes a request in the cloud for a data mapping rule that suits the old device and, if such a data mapping rule exists for the old device in the cloud, downloads the data mapping rule that suits the old device from the cloud.

## Revendications

1. Réseau de bus de terrain, lequel comprend
- au moins un appareil (2, 5, 7, 8, 9, 11, 12),
- un dispositif de liaison (14), lequel est conçu pour transférer des données du réseau de bus de terrain dans un cloud (13), une classe dérivée (17) étant installée sur au moins l'un des appareils (2, 5, 7, 8, 9, 11, 12), laquelle classe est dérivée d'une classe d'en-tête prédéfinie (15), des attributs d'en-tête (16) étant définis par la classe d'en-tête prédéfinie (15) et des attributs supplémentaires (19) étant définis en fonction de l'appareil par la classe dérivée (17), l'au moins un des appareils (2, 5, 7, 8, 9, 11, 12) étant conçu pour générer un objet de données (20) pour la transmission de données au cloud (13) sur la base de la classe dérivée (17),
**caractérisé**
**en ce que** le dispositif de liaison (14) est conçu pour recevoir l'objet de données (20) de l'appareil respectif (2, 5, 7, 8, 9, 11, 12), pour convertir au moins une partie des données contenues dans l'objet de données (20) en un format d'une interface du cloud (13) et pour écrire les données dans le cloud (13), et
**en ce que** le dispositif de liaison est conçu, après détection d'un appareil ancien, pour effectuer une requête dans le cloud concernant une règle de mappage de données correspondant à l'appareil ancien et, si une telle règle de mappage de données pour l'appareil ancien est présente dans le cloud, pour télécharger à partir du cloud la règle de mappage de données correspondant à l'appareil ancien.

2. Réseau de bus de terrain selon la revendication 1, **caractérisé en ce que** le dispositif de liaison est conçu pour recevoir l'objet de données de l'appareil respectif, pour convertir au moins une partie des données contenues dans l'objet de données dans un format d'une interface du cloud, en tenant compte de la structure prédéfinie par la classe d'entête.

3. Réseau de bus de terrain selon la revendication 1 ou la revendication 2, **caractérisé en ce que** la classe dérivée hérite des attributs d'en-tête spécifiés dans la classe d'en-tête à partir de la classe d'en-tête.

4. Réseau de bus de terrain selon l'une des revendications 1 à 3, **caractérisé par** au moins l'un des éléments suivants :
- les attributs d'en-tête comprennent des données d'identification de l'appareil respectif ;
- les attributs d'en-tête comprennent des informations sur le fabricant et le numéro de série de l'appareil respectif ;
- les attributs d'en-tête comprennent des données d'état de l'appareil respectif ;
- les attributs d'en-tête comprennent des données NAMUR de l'appareil respectif ;
- les attributs supplémentaires spécifient les paramètres de l'appareil respectif à écrire dans le cloud ;
- les attributs supplémentaires comprennent des paramètres liés à au moins un élément parmi la surveillance d'état, le diagnostic et le contrôle de fonctionnement de l'appareil de terrain ;
- les attributs supplémentaires comprennent des paramètres de l'appareil respectif à enregistrer régulièrement.

5. Réseau de bus de terrain selon l'une des revendications 1 à 4, **caractérisé par** au moins l'un des éléments suivants :
- la sélection des paramètres de l'appareil définis dans l'objet de données par les attributs supplémentaires est librement définie ;
- la sélection des paramètres de l'appareil définis dans l'objet de données par les attributs supplémentaires est sélectionnée en fonction de l'appareil respectif et d'une option de configuration respective de l'appareil.

6. Réseau de bus de terrain selon l'une des revendications 1 à 5, **caractérisé en ce que** le dispositif de liaison est conçu pour récupérer un objet de données à partir d'un appareil, pour créer un bloc de données dans le cloud sur la base des données d'identification de l'appareil contenues dans les attributs d'en-tête ou pour identifier un bloc de données existant, et pour écrire, dans le cloud, au moins une partie des données contenues dans l'objet de données dans le bloc de données correspondant aux données d'identification de l'appareil.

7. Réseau de bus de terrain selon l'une des revendications 1 à 6, **caractérisé en ce que** l'au moins un appareil comprend au moins l'un des éléments suivants : au moins un appareil de terrain, au moins un appareil passerelle, au moins un appareil d'accès de terrain.

8. Réseau de bus de terrain selon l'une des revendications 1 à 7, **caractérisé en ce que** les attributs d'en-tête comprennent au moins l'un des éléments suivants : métadonnées et données de commande pour la transmission de données du réseau de bus de terrain dans le cloud.

9. Réseau de bus de terrain selon la revendication 8, **caractérisé en ce que** les métadonnées et/ou les données de commande déterminent les intervalles de temps auxquels l'objet de données d'un appareil respectif doit être transmis au dispositif de liaison.

10. Réseau de bus de terrain selon l'une des revendications 1 à 9, **caractérisé en ce que** l'objet de données comprend, pour un ou plusieurs des attributs supplémentaires, des informations indiquant à quels intervalles de temps l'attribut supplémentaire respectif doit être interrogé par l'appareil respectif.

11. Réseau de bus de terrain selon l'une des revendications 1 à 10, **caractérisé par** au moins l'un des éléments suivants :
- l'interface du cloud est réalisée conformément à la norme WebServices ;
- le dispositif de liaison est adapté pour écrire les données contenues dans l'objet de données en tant que paires 'identifiant de données et valeur' dans le cloud ;
- le dispositif de liaison est conçu pour munir d'étiquettes au moins une partie des données contenues dans l'objet de données et les écrire dans le cloud en tant qu'identifiants de données et valeurs avec les étiquettes ;
- une application web est conçue pour accéder aux valeurs de paramètres et les évaluer dans le cloud ;
- un deuxième nuage est conçu pour accéder aux valeurs de paramètres dans le cloud et les évaluer ;
- un ordinateur est conçu pour accéder aux valeurs de paramètres dans le cloud et les évaluer via Internet.

12. Réseau de bus de terrain selon l'une des revendications 1 à 11, **caractérisé en ce que** le dispositif de liaison est conçu pour récupérer des données à partir d'au moins un appareil ancien, sur lequel aucune classe dérivée de la classe d'en-tête prédéfinie n'est installée, et lequel dispositif de liaison n'est pas adapté pour fournir un objet de données pour la transmission de données au cloud, selon au moins une règle de mappage de données prédéfinie, et pour le convertir dans le format de l'interface du cloud ; et/ou **en ce que** le cloud stocke une pluralité de règles prédéfinies de mappage de données pour des appareils anciens, une règle de mappage de données spécifiant comment récupérer des données de l'appareil ancien respectif et les convertir au format de l'interface du cloud.

13. Appareil de terrain (7, 8, 11, 12), lequel est conçu pour être utilisé dans un réseau de bus de terrain selon au moins l'une des revendications 1 à 12, une classe dérivée (17) étant installée sur l'appareil de terrain (7, 8, 11, 12), laquelle classe est dérivée d'une classe d'en-tête prédéfinie (15), des attributs d'en-tête (16) étant définis par la classe d'en-tête (15) et des attributs supplémentaires (19) de l'appareil de terrain étant définis en fonction des appareils par la classe dérivée (17),
l'appareil de terrain (7, 8, 11, 12) étant conçu pour générer et mettre à disposition un objet de données (20) sur la base de la classe dérivée (17), l'objet de données (20) étant transmis à un dispositif de liaison (14) d'un réseau de bus de terrain, et le dispositif de liaison (14) étant conçu pour écrire au moins une partie des données contenues dans l'objet de données (20) dans le cloud (13).

14. Dispositif de liaison (14), lequel est conçu pour être utilisé dans un réseau de bus de terrain selon au moins l'une des revendications 1 à 12 et qui est conçu pour transmettre des données du réseau de bus de terrain dans un cloud (13),
**caractérisé en ce que**
- le dispositif de liaison (14) est conçu pour recevoir d'au moins un appareil (2, 5, 7, 8, 9, 11, 12) du réseau de bus de terrain respectivement un objet de données (20) qui est généré sur la base d'une classe dérivée (17) installée dans l'appareil (2, 5, 7, 8, 9, 11, 12) respectif, la classe dérivée (17) étant dérivée d'une classe d'en-tête prédéfinie (15), et
- le dispositif de liaison (14) est conçu pour convertir au moins une partie des données contenues dans l'objet de données (20) en un format d'une interface du cloud (13) et pour écrire les données dans le cloud (13).

15. Procédé destiné à l'écriture de données à partir d'un réseau de bus de terrain dans un cloud (13), le réseau de bus de terrain comprenant :
- au moins un appareil (2, 5, 7, 8, 9, 11, 12), pour lequel au moins classe dérivée (17) est installée sur l'un des appareils (2, 5, 7, 8, 9, 11, 12), laquelle classe est dérivée d'une classe d'en-tête (15), des attributs d'en-tête (16) étant définis par la classe d'en-tête (15) et des attributs supplémentaires (19) étant définis en fonction des appareils par la classe dérivée (17),
- un dispositif de liaison (14) conçu pour écrire des données du réseau de bus de terrain dans le cloud (13),
le procédé comprenant les étapes suivantes :
- Création, du côté d'un appareil (2, 5, 7, 8, 9, 11, 12) respectif, d'un objet de données (20) à partir de la classe dérivée (17), l'objet de données (20) comprenant des attributs d'en-tête (16) et des attributs supplémentaires (19),
- Transmission de l'objet de données (20) de l'appareil (2, 5, 7, 8, 9, 11, 12) respectif au dispositif de liaison (14), **caractérisé**
- **en ce que**, du côté de l'appareil de liaison (14), au moins une partie des données de l'objet de données (20) est convertie en un format d'une interface du cloud (13),
- **en ce que** les données sont écrites dans le cloud (13), et
- **en ce que** l'appareil de liaison, après avoir détecté un appareil ancien, exécute une requête dans le cloud pour une règle de mappage de données correspondant à l'appareil ancien et, s'il existe une telle règle de mappage de données pour l'appareil ancien dans le cloud, télécharge à partir du cloud la règle de mappage de données correspondant à l'appareil ancien.
